# EUROPÄISCHE PATENTSCHRIFT

(11) **EP 1 832 532 B1**
(45) Veröffentlichungstag und Bekanntmachung des Hinweises auf die Patenterteilung: **24.03.2010**
(21) Anmeldenummer: 07405062.6
(22) Anmeldetag: 27.02.2007
(51) Int. Cl.: B65G 17/38, F16G 13/10

(54) **Förderkette aus über Gelenklager miteinander verbundenen Kettengliedern und Verfahren zur Montage der Kettenglieder**
Chain conveyor comprising chain links connected to each other via rocker bearings and method for mounting chain links
Chaîne de transport en maillons reliés les uns aux autres par une pendule et procédé de montage des maillons

(30) Priorität: 08.03.2006 CH 3672006
(43) Veröffentlichungstag der Anmeldung: 12.09.2007
(73) Patentinhaber: Ferag AG, 8340 Hinwil (CH)
(72) Erfinder: Mäder, Carl Conrad, 8335 Hittnau (CH)
(74) Vertreter: Frei Patent Attorneys

(56) Entgegenhaltungen:
- FR-A- 1 356 773
- FR-A- 2 319 818
- GB-A- 588 483
- GB-A- 906 751
- GB-A- 1 032 792
- US-A- 5 129 506

## Beschreibung

Die Erfindung liegt auf dem Gebiete der Fördertechnik und betrifft eine Förderkette nach dem Oberbegriff des ersten unabhängigen Patentanspruchs. Die Förderkette besteht aus einer Mehrzahl von über Gelenklager miteinander verbundenen Kettengliedern, sie ist insbesondere geeignet für die Förderung von einzeln gehaltenen Druckprodukten und weist dafür Greifer auf, wobei beispielsweise an jedem Kettenglied ein Greifer angeordnet ist. Die Erfindung betrifft ferner ein Verfahren nach dem Oberbegriff des weiteren unabhängigen Patentanspruchs. Das Verfahren dient zur Montage der Kettenglieder der erfindungsgemässen Förderkette.

Mit Förderketten aus Kettengliedern, die über Gelenklager miteinander verbunden sind, lassen sich Förderwege mit Kurven und Verdrehungen in allen Richtungen realisieren, denn durch die Gelenklager sind benachbarte Kettenglieder relativ zueinander in allen Richtungen quer zur Kettenlänge beschränkt verschwenkbar. Die Ketten werden üblicherweise in sogenannten Kettenkanälen geführt und die Kettenglieder weisen Laufrollen auf, auf denen sie auf in den Kanälen vorgesehenen Schienen abrollen.

Jedes Kettenglied einer derartigen Kette weist üblicherweise zwei Laschen auf, die sich im wesentlichen in der Kettenlängsrichtung erstrecken. Die beiden Laschen sind an ihrem einen Ende (Bolzenende) über einen Bolzen miteinander verbunden, wobei ein mittlerer Bereich des Bolzens zwischen den Bolzenenden der Laschen in einem Gelenklager gelagert ist und wobei das Gelenklager am anderen Ende (Lagerende) der Laschen eines benachbarten Kettengliedes angeordnet ist. Die beiden Laschen jedes Kettengliedes sind also an ihren Bolzenenden über den Bolzen miteinander verbunden und im Bereich ihrer Lagerenden ist das Gelenklager angeordnet, wobei der Bolzen jedes Kettengliedes durch die gelenkige Lagerung im Bereich der Lagerenden der Laschen des benachbarten Kettengliedes mit diesem verbunden ist.

Am Bolzen jedes Kettengliedes ist üblicherweise beidseitig ausserhalb der Laschen je eine Laufrolle angeordnet. Zwischen den Bolzenenden und den Lagerenden der Laschen jedes Kettengliedes ist beispielsweise ein Tragkörper angeordnet, an dem z.B. ein Greifer montiert ist. Der Tragkörper kann zusätzlich eine dritte Laufrolle tragen, deren Achse senkrecht zum Bolzen bzw. zu den Achsen der anderen beiden Laufrollen ausgerichtet ist.

Als Gelenklager wird üblicherweise eine im Handel erhältliche Lagerbuchse verwendet, die ein eine Lagerpfanne bildendes Lagergehäuse und einen in der Lagerpfanne gefangenen und darin frei drehbaren, kugeligen Lagerkörper aufweist. Der Lagerkörper hat eine zylindrische Öffnung zur Aufnahme des Bolzens. Das Lagergehäuse ist üblicherweise zylindrisch und die Lagerpfanne weist zwei einander gegenüberliegende Öffnungen für den Durchtritt des Bolzens auf. Das Lagergehäuse wird herstellerseitig meist einstückig gefertigt, üblicherweise im Bereiche der Lagerpfanne beschichtet und um den Lagerkörper geschlossen. Lagergehäuse und Lagerkörper bilden zusammen die Lagerbuchse. Montageseitig wird dann das Lagergehäuse der Buchse mit den Lagerenden der Laschen eines Kettengliedes und der Lagerkörper der Buchse mit dem Bolzen eines benachbarten Kettengliedes verbunden. Üblicherweise werden für die Montage des Lagergehäuses an den Lagerenden der Laschen je eine Öffnung vorgesehen, die auf den Aussendurchmesser des Lagergehäuses abgestimmt sind. Die beiden Laschen werden dann aneinander befestigt, derart, dass ihre Lagerenden aneinander liegen und dass die beiden für das Lagergehäuse vorgesehenen Öffnungen aufeinander ausgerichtet sind. Die Lagerbuchse wird in den Öffnungen positioniert und durch Verstemmen wird eine Verbindung zwischen Lagergehäuse und Laschen geschaffen, derart, dass das Lagergehäuse relativ zu den Laschen weder verdreht noch in axialer Richtung verschoben werden kann.

FR 2 319 818 A1 offenbart eine Förderkette gemäß dem Oberbegriff des Anspruchs 1.

Die Erfindung stellt sich nun die Aufgabe, eine Förderkette aus über Gelenklager miteinander verbundenen Kettengliedern zu schaffen, wobei für die erfindungsgemässe Förderkette gegenüber bekannten derartigen Förderketten die Montage der Kettenglieder flexibler und einfacher sein soll.

Diese Aufgabe wird gelöst durch die Förderkette und durch das Verfahren zur Montage der Kettenglieder der Förderkette, wie sie in den entsprechenden Patentansprüchen 1 und 10 definiert sind.

Die erfindungsgemässe Förderkette unterscheidet sich von den weiter oben kurz beschriebenen, bekannten Förderketten aus über Gelenklager miteinander verbundenen Kettengliedern dadurch, dass die Gelenklager der Kettenglieder zweiteilige Lagergehäuse mit Flanschen aufweisen, wobei sich die Flansche in einer zur Lagergehäuseachse senkrechten Mittelebene von der Lagerpfanne gegen aussen erstrecken. Ferner weisen die Kettenglieder ein Fixiermittel auf, das an den Flanschen und an den Lagerenden der Laschen angreift und das erstens die Lagergehäuseteile zu einer den Lagerkörper fest umschliessenden Lagerpfanne zusammenhält, zweitens die Lagerenden der Laschen relativ zueinander fixiert und drittens das Lagergehäuse in einer gegen Verdrehung und axiale Verschiebung gesicherten Position in diesen Lagerenden fixiert. Das Fixiermittel, das alle die genannten Funktionen übernehmen kann, besteht beispielsweise aus einer Mehrzahl von Bohrungen durch die Flansche der Lagergehäuseteile und die Lagerenden der Laschen und Nieten, die in den Bohrungen angeordnet sind.

Die Flansche der Lagergehäuse entsprechen in ihrer Form vorteilhafterweise der Form der Lagerenden der Laschen, derart, dass die Lagergehäuseteile und die Laschen und gegebenenfalls darin im Voraus erstellte Bohrungen als Teil des Fixiermittels für die Montage in einfacher Weise und insbesondere in derselben Ausrichtvorrichtung aufeinander ausgerichtet werden können.

Die beiden Lagergehäuseteile sind vorteilhafterweise identisch. Wenn sie zusammen ein Lagergehäuse bilden mit einer Trennebene, die eine quer zur Gehäuseachse ausgerichtete Mittelebene ist, weist jeder der Lagergehäuseteile einen Teilflansch auf, wobei die beiden Teilflansche in montiertem Zustand aneinander liegen. Ein derartiges Gelenklager wird beispielsweise wie folgt an den Lagerenden der Laschen montiert: Das Lagerende der ersten Lasche wird mittels Ausrichtvorrichtung positioniert; der erste Lagergehäuseteil wird mit der Lagerpfanne gegen oben mittels derselben Ausrichtvorrichtung auf dem bereits positionierten Lagerende und auf dieses ausgerichtet positioniert; der Lagerkörper wird in die Lagerpfanne des ersten Lagergehäuseteils gelegt; der zweite Lagergehäuseteil wird mit der Lagerpfanne gegen unten positioniert und ausgerichtet; das Lagerende der zweiten Lasche wird positioniert und ausgerichtet; und dann werden die Fixiermittel montiert.

Um die oben kurz beschriebene Montage der Gelenklager an den Laschen der Kettenglieder der erfindungsgemässen Förderkette weiter zu vereinfachen, können die Lagergehäuseteile Befestigungsmittel aufweisen, mit denen sie mit einfachsten Mitteln und vorläufig, das heisst ohne für den Betrieb notwendige Festigkeit und gegebenenfalls wieder lösbar, um den Lagerkörper geschlossen werden können. Die derart vormontierten Lagerbuchsen können dann beispielsweise an Lager gelegt und für die Montage als je ein Teil (anstelle von drei Teilen, wie oben beschrieben) positioniert und auf die Lagerenden der Laschen ausgerichtet werden. Die vormontierten Lagerbuchsen können auch zwei in einer radialen Ebene trennbare Lagergehäuseteile aufweisen.

Ebenfalls zur weiteren Vereinfachung der Montage des Gelenklagers an den Lagerenden der Laschen können auch die Lagergehäuseteile und die Lagerenden der Laschen Befestigungsmittel aufweisen, mit denen je ein Lagergehäuseteil vorläufig an einem Lagerende einer Lasche montierbar ist. In diesem Fall werden zwei vormontierte Einheiten aus je einer Lasche mit daran vormontiertem Lagergehäuseteil beispielsweise an Lager gelegt und als Einheiten aufeinander positioniert und ausgerichtet bevor sie definitiv aneinander fixiert werden.

Als Befestigungsmittel zur vorläufigen Fixierung von Lagergehäuseteilen aneinander oder von Lagergehäuseteilen an Laschen eignen sich insbesondere Stifte und auf die Stifte ausgerichtete Bohrungen, die für einen leichten Pressfit oder für einen Schnappfit ausgestaltet sind. Auch Klebeverbindungen können angewendet werden. Zur vorläufigen Befestigung von Lagergehäuseteilen an Laschen können die Lagerghäuseteile auch derart ausgelegt sein, dass sie in die Öffnungen der Lagerenden der Laschen einschnappbar sind.

Offensichtlich ist die Montage der Kettenglieder sehr einfach und sie ist insofern flexibel, als die Materialpaarungen zwischen Lagerkörper und Lagergehäuse auf der Seite der Kettenkonstruktion oder der Montage zu einem bedeutend höheren Masse frei wählbar und dadurch an die potentielle Belastung einer Kette anpassbar ist als dies mit vom Hersteller bezogenen fertigen Lagerbuchsen der Fall ist. Dabei können die Lagerkörper und Lagergehäuseteile aus einem metallischen Werkstoff oder aus Kunststoff bestehen und die Materialpaarung und gegebenenfalls eine Beschichtung der Lagerpfanne kann je Aufgabe und Belastung der Kettenglieder ausgewählt werden.

Die erfindungsgemässe Förderkette eignet sich, wie bereits eingangs erwähnt, insbesondere für die Förderung von einzeln gehaltenen Druckprodukten, wie Zeitungen Zeitschriften oder Broschüren, wobei beispielsweise jedes Kettenglied mit einem Greifer zum Ergreifen eines Druckproduktes ausgerüstet ist. Selbstverständlich kann eine gleiche Förderkette aber auch für andere Förderaufgaben ausgerüstet sein, wobei dann nicht unbedingt Greifer sondern andere Haltemittel oder Tragmittel an den Kettengliedern angeordnet sind und wobei nicht jedes Kettenglied mit einem solchen Mittel ausgerüstet sein muss.

Bevorzugte Ausführungsformen der erfindungsgemässen Förderkette aus über Gelenklager miteinander verbundenen Kettengliedern werden im Zusammenhang mit den folgenden Figuren im Detail beschrieben. Dabei zeigen:
- **Figuren 1 und 2**: ein Kettenglied einer bevorzugten Ausführungsform der erfindungsgemässen Förderkette (Figur 1: in montiertem Zustand; Figur 2: teilweise explodiert dargestellt);
- **Figur 3**: die Teile des Gelenklagers des Kettengliedes gemäss Figuren 1 und 2;
- **Figur 4**: eine vormontierte Lagerbuchse für das Kettenglied gemäss Figur 1;
- **Figur 5**: die Teile einer anderen Ausführungsform der vormontierbaren Lagerbuchse;
- **Figur 6**: ein Lagergehäuseteil und ein Lagerende einer Lasche mit Befestigungsmitteln zur vorläufigen Befestigung aneinander.

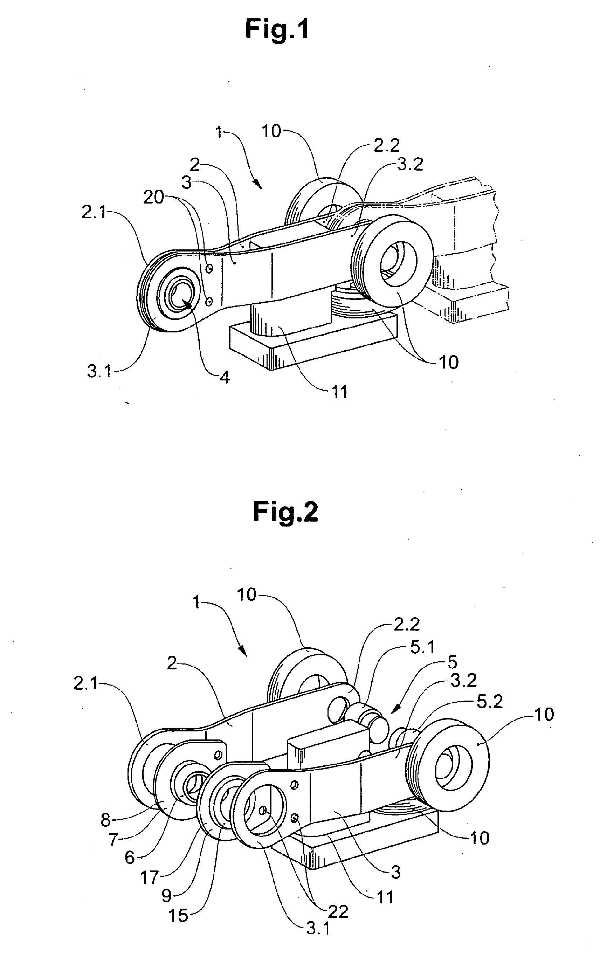

**Figuren 1 und 2** zeigen ein Kettenglied 1 einer bevorzugten Ausführungsform der erfindungsgemässen Förderkette. Figur 1 zeigt das Kettenglied 1 in montiertem Zustand, Figur 2 ist eine teilweise explodierte Darstellung. Das Kettenglied 1 weist in der bereits erwähnten Art zwei Laschen 2 und 3 auf, die im Bereich ihrer aufeinander ausgerichteten Lagerenden 2.1 und 3.1 ein Gelenklager 4 tragen und an ihren Bolzenenden 2.2 und 3.2 über einen Bolzen 5 bzw. über entsprechende, im Lagerkörper des nächsten Kettengliedes befestigte Bolzenstümpfe 5.1 und 5.2 miteinander verbunden sind. Das Gelenklager 4 weist einen kugeligen Lagerkörper 6 mit einer durchgehenden Öffnung zur Aufnahme und Befestigung des Bolzens 5 des benachbarten Kettengliedes auf sowie zwei Lagergehäuseteile 8 und 9.

Das Kettenglied 1 weist ferner drei Laufrollen 10 auf und einen Tragkörper 11, an dem beispielsweise ein (nicht dargestellter) Greifer montiert ist.

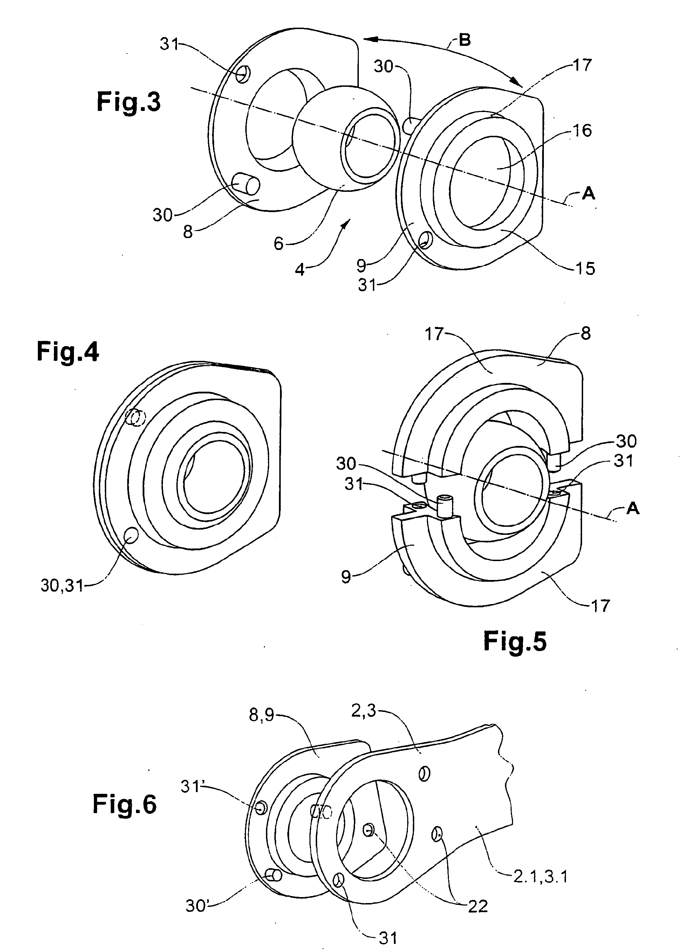

**Figur 3** zeigt in einem grösseren Massstab die Teile des Gelenklagers 4 des Kettengliedes gemäss Figuren 1 und 2. Die beiden Lagergehäuseteile 8 und 9 bilden eine Lagerpfanne für den Lagerkörper 6, wobei die Trennebene zwischen den beiden Lagergehäuseteilen 8 und 9 eine quer zur Gehäuseachse A ausgerichtete Mittelebene ist. Beide Lagergehäuseteile 8 und 9 weisen einen Gelenkpfannenbereich 15 mit einer durchgehenden Öffnung 16 auf und einen sich auf der Trennebene vom Gelenkpfannenbereich 15 gegen aussen erstreckenden Teilflansch 17. Die Teilflansche der beiden Lagergehäuseteile 8 und 9 liegen in montiertem Zustand aneinander an, wobei die beiden Teilflansche 17 je die Hälfte der Dicke des gesamten Flansches ausmachen. Dabei ist es nicht notwendig, dass sich der Flansch ununterbrochen um die ganze Lagerpfanne erstreckt. Es sind auch eine Mehrzahl von entsprechend angeordneten, voneinander getrennten Flanschsektoren denkbar.

Wie insbesondere aus der Figur 2 ersichtlich ist, weisen die Lagerenden 2.1 und 3.1 der Laschen 2 und 3 Öffnungen auf, die auf die Lagerpfannenbereiche 15 der Lagergehäuseteile 8 und 9 abgestimmt sind. Ferner sind die Teilflansche 17 der Lagergehäuseteile 8 und 9 formmässig auf die Lagerenden 2.1 und 3.1 abgestimmt, derart, dass sie mit derselben Ausrichtvorrichtung aufeinander ausgerichtet werden können. Im dargestellten Falle sind die Flansche gleich gross wie die Lagerenden der Laschen und weisen eine gleiche, im wesentlichen runde Form auf. Eine für die Ausrichtung geeignete Vorrichtung weist beispielsweise eine Grundplatte und eine Mehrzahl von senkrecht auf der Grundplatte stehenden Ausrichtstäben auf, die in einer dem Umriss der Teilflansche 17 und der Lagerenden 2.1 und 3.1 der Laschen 2 und 3 entsprechenden Linie angeordnet sind.

Als Fixierungsmittel werden beispielsweise durch die aufeinander ausgerichteten Lagerenden 2.1 und 3.1 der Laschen 2 und 3 und durch die dazwischen angeordneten Teilflansche 17 der Lagergehäuseteile 7 und 8 Bohrungen 22 (Figur 2) gebohrt und darin Nieten 20 (Figur 1) angeordnet. Wenn die Lagerenden 2.1 und 3.1 der Laschen gegeneinander vorgespannt sind, reicht es, zwei Vernietungen auf der gegen das Bolzenende 2.2 und 3.2 gerichteten Seite der Lagergehäuseteile 7 und 8 anzubringen, wie es in der Figur 1 dargestellt ist. Dadurch wird es möglich, die radiale Ausdehnung der Teilflansche 17 und der Lagerenden 2.1 und 3.1 der Laschen 2 und 3 klein zu gestalten, was für viele Anwendungen vorteilhaft ist. Es ist aber auch möglich, entsprechende Bohrungen und Nieten rund um die Gelenkpfanne zu verteilen. Durch die Vernietungen sind einerseits die Lagergehäuseteile 8 und 9 sicher miteinander verbunden und schliessen den Lagerkörper 6 sicher ein und andererseits ist die aus den Lagergehäuseteilen 8 und 9 und dem Lagerkörper 6 bestehende Lagerbuchse gegen Drehungen und gegen axiale Verschiebungen gesichert an den Lagerenden 2.1 und 3.1 der Laschen 2 und 3 fixiert, wobei auch diese Lagerenden 2.1 und 3.1 relativ zueinander fixiert sind.

Selbstverständlich ist es auch möglich, die Bohrungen 22 für die Vernietung der Teilflansche 17 der Lagergehäuseteile 8 und 9 und der Lagerenden 2.1 und 3.1 der Laschen 2 und 3 in allen Teilen separat einzubringen und die aufeinander ausgerichteten Teile dann nur noch zu vernieten. Dies ist in der Figur 2 durch die Bohrungen 22 angedeutet.

Es sind auch andere Fixiermittel als Vernietungen denkbar, beispielsweise Verschraubungen oder Klemmen, die in aufeinander ausgerichteten Nuten in den Schmalseiten der Laschen 2 und 3 und in den Teilflanschen 17 der Lagergehäuseteile 8 und 9 angeordnet werden.

Wie in Figur 3 dargestellt, ist es auch möglich, die Lagergehäuseteile 8 und 9 mit aufeinander abgestimmten Befestigungsmitteln zu versehen, mit deren Hilfe die beiden Lagergehäuseteile 8 und 9 vorläufig, das heisst ohne für den Betrieb notwendige Festigkeit und gegebenenfalls wieder lösbar, um den Lagerkörper 6 zu schliessen, wodurch eine vormontierte Lagerbuchse entsteht, die an Lager gelegt und als Einheit montiert werden kann. Im dargestellten Falle sind die Befestigungsmittel Stifte 30 und auf die Stifte ausgerichtete Bohrungen 31, wobei Stifte und Bohrungen beispielsweise für einen Pressfit oder einen Schnappfit ausgebildet sind.

Wie in der Figur 3 durch den Doppelpfeil B angedeutet, können die beiden mit Befestigungsmitteln ausgerüsteten Lagergehäuseteile 8 und 9 auch scharnierend miteinander verbunden sein, im Falle von Kunststoffteilen beispielweise mittels Filmscharnier.

**Figur 4** zeigt die aus den in der Figur 3 dargestellten Teilen vormontierte Lagerbuchse.

**Figur 5** zeigt vormontierbare Lagergehäuseteile 8 und 9, die ein Lagergehäuse mit einer radialen Trennebene bilden, wobei die Lagergehäuseachse A in der Trennebene liegt. Die Befestigungsmittel sind im Bereiche dieser Trennebene angeordnet und bestehen auch in diesem Falle aus Stiften 30 und entsprechenden Bohrungen 31. Offensichtlich eignen sich Lagergehäuseteile, wie sie in der Figur 5 dargestellt sind, insbesondere für eine Vormontage der Lagerbuchse. Der Flansch des durch die Teile 8 und 9 gebildeten Lagergehäuses ist durch die Trennebene in zwei Teilflansche 17 getrennt, wobei jeder der Teilflansche 17 180° des ganzen Flansches bildet. Auch in diesem Falle ist es nicht notwendig, dass der Flansch sich rund um die Lagerpfanne erstreckt. Auch entsprechend angeordnete, voneinander getrennte Flanschsektoren können die Flanschfunktion übernehmen.

**Figur 6** zeigt die Teile einer vormontierten Einheit, die aus einem Lagergehäuseteil 8 oder 9 und einer Lasche 2 oder 3 (nur Lagerende 2.1 oder 3.1 dargestellt) besteht. Für die Vormontage sind Befestigungsmittel vorgesehen, die auch hier aus Stiften 30' und entsprechenden Bohrungen 31' bestehen können. Es ist aber auch möglich, den Gelenkpfannenbereich der Lagergehäuseteile derart auszugestalten, dass sie für die Vormontage an einem Lagerende einer Lasche einschnappbar oder mittel Pressfit einsteckbar sind, so dass sich weitere Befestigungsmittel erübrigen.

## Patentansprüche

1. Förderkette aus über Gelenklager (4) miteinander verbundenen Kettengliedern (1), wobei jedes Kettenglied (1) zwei sich im wesentlichen in der Richtung der Kettenlänge erstreckende Laschen (2 und 3) mit je einem Lagerende (2.1 und 3.1) und einem Bolzenende (2.2 und 3.2) und einen die beiden Bolzenenden (2.2 und 3.2) der Laschen (2 und 3) verbindenden und gelenkig an den Lagerenden (2.1 und 3.1) der Laschen (2 und 3) eines benachbarten Kettengliedes gelagerten Bolzen (5) aufweist und wobei das Gelenklager (4) einen kugeligen Lagerkörper (6) und ein Lagergehäuse (8 und 9) aufweist, **dadurch gekennzeichnet, dass** das Lagergehäuse aus zwei Lagergehäuseteilen (8 und 9) besteht, dass jeder Lagergehäuseteil (8 und 9) einen Teilflansch (17) aufweist und dass die Teilflansche (17) der Lagergehäuseteile (8 und 9) und die Lagerenden (2.1 und 3.1) der Laschen (2 und 3) mit Hilfe eines gemeinsamen Fixiermittels zusammengehalten sind, derart, dass allein durch dieses Fixiermittel die Lagergehäuseteile (8 und 9) den Lagerkörper (6) fest umschliessen und in den Lagerenden (2.1 und 3.1) der Laschen (2 und 3) gegen Verdrehung und gegen axiale Verschiebung gesichert befestigt sind und die Lagerenden (2.1 und 3.1) der Laschen (2 und 3) relativ zueinander fixiert sind.

2. Förderkette nach Anspruch 1, **dadurch gekennzeichnet, dass** eine Trennebene zwischen den beiden Lagergehäuseteilen (8 und 9) eine senkrecht zu einer Lagergehäuseachse (A) ausgerichtete Mittelebene ist.

3. Förderkette nach Anspruch 1, **dadurch gekennzeichnet, dass** eine Trennebene zwischen den beiden Lagergehäuseteilen (8 und 9) eine radiale Mittelebene ist, in der eine Lagergehäuseachse (A) liegt.

4. Förderkette nach einem der Ansprüche 1 bis 3, **dadurch gekennzeichnet, dass** das gemeinsame Fixiermittel auf der gegen das Bolzenende (2.2 und 3.2) der Laschen (2 und 3) gerichteten Seite des Gelenklagers (4) angeordnet ist und dass die Lagerenden (2.1 und 3.1) der Laschen (2 und 3) vorgespannt sind.

5. Förderkette nach einem der Ansprüche 1 bis 4, **dadurch gekennzeichnet, dass** das Fixiermittel Bohrungen (22) und in den Bohrungen (22) angeordnete Nieten (20) aufweist.

6. Förderkette nach einem der Ansprüche 1 bis 5, **dadurch gekennzeichnet, dass** die Teilflansche (17) der Lagergehäuseteile (8 und 9) eine an die Form der Lagerenden (2.1 und 3.1) der Laschen (2 und 3) angepasste Form haben, derart, dass die Lagerenden (2.1 und 3.1) der Laschen (2 und 3) und die Lagergehäuseteile (8 und 9) mit derselben Ausrichtvorrichtung aufeinander ausrichtbar sind.

7. Förderkette nach einem der Ansprüche 1 bis 6, **dadurch gekennzeichnet, dass** die Lagergehäuseteile (8 und 9) Befestigungsmittel aufweisen für eine vorläufige Befestigung aneinander.

8. Förderkette nach einem der Ansprüche 1 bis 6, **dadurch gekennzeichnet, dass** die Lagergehäuseteile (8 und 9) und die Lagerenden (2.1 und 3.1) der Laschen (2 und 3) Befestigungsmittel für eine vorläufige Befestigung je eines Lagergehäuseteils (8 oder 9) an einem Lagerende (2.1 oder 3.1) einer Lasche (2 oder 3) aufweisen.

9. Förderkette nach einem der Ansprüche 7 oder 8, **dadurch gekennzeichnet, dass** die Befestigungsmittel Stifte (30, 30') und an die Stifte (30, 30') angepasste Bohrungen (31, 31') aufweisen.

10. Verfahren zur Montage eines Kettengliedes (1) einer Förderkette nach Anspruch 1, wobei die Lagerenden (2.1 und 3.1) der Laschen (2 und 3) aneinander fixiert und im Bereich dieser Lagerenden ein Gelenklager (4) bestehend aus Lagergehäuse und Lagerkörper (6) montiert wird, **dadurch gekennzeichnet, dass** die Lagerenden (2.1 und 3.1) der Laschen (2 und 3) und die Lagergehäuseteile (8 und 9) aufeinander ausgerichtet positioniert und der Lagerkörper (6) in die durch die Lagergehäuseteile (8 und 9) gebildete Lagerpfanne eingebracht wird und dass dann die Teilflansche (17) der Lagegehäuseteile (8 und 9) und die Lagerenden (2.1 und 3.1) der Laschen (2 und 3) mit einem gemeinsamen Fixiermittel relativ zueinander fixiert werden.

11. Verfahren nach Anspruch 10, **dadurch gekennzeichnet, dass** die Lagergehäuseteile (8 und 9) und der Lagerkörper (6) mittels an den Lagergehäuseteilen angeordneter Befestigungsmittel zu einer vorläufigen Lagerbuchse vormontiert werden und dass die vorläufige Lagerbuchse mit den Lagerenden (2.1 und 3.1) der Laschen (2 und 3) ausgerichtet positioniert und dann definitiv fixiert wird.

12. Verfahren nach Anspruch 10, **dadurch gekennzeichnet, dass** je ein Lagergehäuseteil (8 oder 9) und ein Lagerende (2.1 oder 3.1) einer Lasche (2 oder 3) mittels an den Lagergehäuseteilen und an den Lagerenden angeordneter Befestigungsmittel zu einer vorläufigen Einheit vormontiert wird und dass die vorläufigen Einheiten aufeinander ausgerichtet positioniert und dann definitiv fixiert werden.

13. Verfahren nach einem der Ansprüche 10 bis 12, **dadurch gekennzeichnet, dass** die Lagerenden (2.1 und 3.1) der Laschen (2 und 3) und die Teilflansche (17) der Lagergehäuseteile (8 und 9) mit Hilfe von in aufeinander ausgerichteten Bohrungen (22) angeordneten Nieten (20) fixiert werden.

## Claims

1. A conveyor chain comprising chain links (1) which are connected to one another via pivoting bearings (4), wherein each chain link (1) comprises two link plates (2 and 3) extending essentially in the direction of a chain length and each having a bearing end (2.1 and 3.1) and a bolt end (2.2 and 3.2), and further comprising a bolt (5) connecting the two bolt ends (2.2 and 3.2) of the link plates (2 and 3) and being articulatedly mounted in the bearing ends (2.1 and 3.1) of the link plates (2 and 3) of an adjacent chain link, and wherein the pivoting bearing (4) comprises a ball-like bearing body (6) and a bearing housing (8 and 9), **characterized in that** the bearing housing consists of two bearing housing parts (8 and 9), that each bearing housing part (8 and 9) comprises a part flange (17), and that the part flanges (17) of the bearing housing parts (8 and 9), and the bearing ends (2.1 and 3.1) of the link plates (2 and 3) are held together with the help of a common fixation means, in a manner such that the bearing housing parts (8 and 9) firmly enclose the bearing body (6) and are fastened in the bearing ends (2.1 and 3.1) of the link plates (2 and 3), secured against rotation and axial displacement, and the bearing ends (2.1 and 3.1) of the link plates (2 and 3) are fixed relative to one another, by way of this fixation means only.

2. The conveyor chain according to claim 1, **characterized in that** a parting plane between the two bearing housing parts (8 and 9) is a middle plane aligned perpendicularly to a bearing housing axis (A).

3. The conveyor chain according to claim 1, **characterized in that** a parting plane between the two bearing housing parts (8 and 9) is a radial middle plane, in which a bearing housing axis (A) lies.

4. The conveyor chain according to one of claims 1 to 3, **characterized in that** the common fixation means is arranged on a side of the pivoting bearing (4) facing towards the bolt end (2.2 and 3.2) of the link plates (2 and 3), and that the bearing ends (2.1 and 3.1) of the link plates (2 and 3) are biased towards each other.

5. The conveyor chain according to one of claims 1 to 4, **characterized in that** the fixation means comprises bores (22) and rivets (20) arranged in the bores (22).

6. The conveyor chain according to one of claims 1 to 5, **characterized in that** the part flanges (17) of the bearing housing parts (8 and 9) have a shape which is adapted to the shape of the bearing ends (2.1 and 3.1) of the link plates (2 and 3), in a manner such that the bearing ends (2.1 and 3.1) of the link plates ( 2 and 3), and the bearing housing parts (8 and 9) are able to be aligned with one another using one only aligning device.

7. The conveyor chain according to one of the claims 1 to 6, **characterized in that** the bearing housing parts (8 and 9) comprise fastening means for a provisional fastening to one another.

8. The conveyor chain according to one of claims 1 to 6, **characterized in that** the bearing housing parts (8 and 9) and the bearing ends (2.1 and 3.1) of the link plates (2 and 3) comprise fastening means for a provisional fastening in each case of one bearing housing part (8 or 9) in the bearing end (2.1 or 3.1) of one link plate (2 or 3).

9. The conveyor chain according to one of claims 7 or 8, **characterized in that** the fastening means comprise pins (30, 30') and bores (31, 31') adapted to the pins (30, 30').

10. A method for assembling a chain link (1) of a conveyor chain according to claim 1, wherein the bearing ends (2.1 and 3.1) of the link plates (2 and 3) are fixed to one another, and a pivoting bearing (4) consisting of a bearing housing and bearing body (6) is mounted in the region of these bearing ends, **characterized in that** the bearing ends (2.1 and 3.1) of the link plates (2 and 3), and the bearing housing parts (8 and 9) are positioned in alignment with one another, and the bearing body (6) is introduced into the bearing cup formed by the bearing housing parts (8 and 9), and that the part flanges (17) of the bearing housing parts (8 and 9), and the bearing ends (2.1 and 3.1) of the link plates (2 and 3), are then fixed relative to one another using one common fixation means.

11. The method according to claim 10, **characterized in that** the bearing housing parts (8 and 9) and the bearing body (6) are pre-assembled into a provisional bearing bush by way of fastening means arranged on the bearing housing parts, and that the provisional bearing bush is positioned in alignment with the bearing ends (2.1 and 3.1) of the link plates ( 2 and 3) to be then definitively fixed to the latter.

12. The method according to claim 10, **characterized in that** in each case one bearing housing part (8 or 9) and one bearing end (2.1 or 3.1) of a link plate (2 or 3) is pre-assembled into a provisional unit by way of a fastening means arranged on the bearing housing parts and at the bearing ends, and that the provisional units are positioned in alignment with one another, and are then definitively fixed to one another.

13. The method according to one of claims 10 to 12, **characterized in that** the bearing ends (2.1 and 3.1) of the link plates (2 and 3), and the part flanges (17) of the bearing housing parts (8 and 9) are fixed to each other with the help of rivets (20) arranged in aligned bores (22).

## Revendications

1. Chaîne de transport constituée de maillons (1) reliés les uns aux autres par des paliers articulés (4), chaque maillon (1) présentant deux pattes (2 et 3) qui s'étendent essentiellement dans le sens de la longueur de la chaîne et qui présentent chacun une extrémité de palier (2.1 et 3.1) et une extrémité de goujon (2.2. et 3.2) ainsi qu'un goujon (5) qui relie les deux extrémités du goujon (2.2. et 3.2) des pattes (2 et 3) et qui est articulé sur les extrémités de palier (2.1 et 3.1) des pattes (2 et 3) d'un maillon voisin, le palier articulé (4) présentant un corps de palier (6) sphérique et un boîtier de palier (8 et 9),
**caractérisée en ce que**
le boîtier de palier est constitué de deux parties (8 et 9) de boîtier de palier,
**en ce que** chaque partie de boîtier de palier (8 et 9) présente une bride partielle (17),
**en ce que** les brides partielles (17) des parties (8 et 9) de boîtier de palier et les extrémités de palier (2.1 et 3.1) des pattes (2 et 3) sont maintenues à l'aide d'un moyen de fixation commun, de sorte que les parties (8 et 9) de boîtier de palier entourent fermement le corps de palier (6) uniquement par ce moyen de fixation et sont empêchées de manière sûre de tourner et de se déplacer axialement dans les extrémités de palier (2.1 et 3.1) des pattes (2 et 3) et que les extrémités de palier (2.1 et 3.1) des pattes (2 et 3) sont immobilisées l'une par rapport à l'autre.

2. Chaîne transporteuse selon la revendication 1, **caractérisée en ce que** le plan de séparation entre les deux parties (8 et 9) de boîtier de palier est un plan central orienté perpendiculairement à un axe (A) du boîtier de palier.

3. Chaîne transporteuse selon la revendication 1, **caractérisée en ce que** le plan de séparation entre les deux parties (8 et 9) de boîtier de palier est un plan central radial qui contient un axe (A) du boîtier de palier.

4. Chaîne transporteuse selon l'une des revendications 1 à 3, **caractérisée en ce que** le moyen de fixation commun est disposé sur le côté du palier articulé (4) orienté vers l'extrémité de goujon (2.2 et 3.2) des pattes (2 et 3) et **en ce que** les extrémités de palier (2.1 et 3.1) des pattes (2 et 3) sont précontraintes.

5. Chaîne transporteuse selon l'une des revendications 1 à 4, **caractérisée en ce que** le moyen de fixation présente des alésages (22) et des rivets (20) disposés dans les alésages (22).

6. Chaîne transporteuse selon l'une des revendications 1 à 5, **caractérisée en ce que** la forme des brides partielles (17) des parties (8 et 9) de boîtier de palier est adaptée à la forme des extrémités de palier (2.1 et 3.1) des pattes (2 et 3) de telle sorte que les extrémités de palier (2.1 et 3.1) des pattes (2 et 3) et les parties (8 et 9) de boîtier de palier peuvent être alignées l'une sur l'autre à l'aide d'un même dispositif d'alignement.

7. Chaîne transporteuse selon l'une des revendications 1 à 6, **caractérisée en ce que** les parties (8 et 9) de boîtier de palier présentent des moyens de fixation qui les fixent provisoirement l'une sur l'autre.

8. Chaîne transporteuse selon l'une des revendications 1 à 6, **caractérisée en ce que** les parties (8 et 9) de boîtier de palier et les extrémités de palier (2.1 et 3.1) des pattes (2 et 3) présentent des moyens de fixation qui permettent de fixer provisoirement une partie (8 ou 9) de boîtier de palier sur une extrémité de palier (2.1 ou 3.1) d'une patte (2 ou 3).

9. Chaîne transporteuse selon l'une des revendications 7 ou 8, **caractérisée en ce que** les moyens de fixation présentent des tiges (30, 30') et des alésages (31, 31') adaptés aux tiges (30, 30').

10. Procédé de montage d'un maillon (1) d'une chaîne transporteuse selon la revendication 1, dans lequel les extrémités de palier (2.1 et 3.1) des pattes (2 et 3) sont immobilisées l'une sur l'autre et un palier articulé (4) constitué de boîtiers de palier et de corps de palier (6) est monté dans la zone formée par ses extrémités de palier,
**caractérisé en ce que**
les extrémités de palier (2.1 et 3.1) des pattes (2 et 3) et les parties (8 et 9) de boîtier de palier sont alignées l'une sur l'autre,
**en ce que** le corps de palier (6) est inséré dans la cuvette de palier formée par les parties (8 et 9) de boîtier de palier et
**en ce que** les brides partielles (17) des parties (8 et 9) de boîtier de palier et les extrémités de palier (2.1 et 3.1) des pattes (2 et 3) sont ensuite immobilisées l'une par rapport à l'autre à l'aide d'un moyen de fixation commun.

11. Procédé selon la revendication 10, **caractérisé en ce que** les parties (8 et 9) de boîtier de palier et le corps de palier (6) sont prémontées pour former une douille provisoire de palier à l'aide de moyens de fixation disposés sur les parties de boîtier de palier et **en ce que** la douille provisoire de palier est alignée sur les extrémités de palier (2.1 et 3.1) des pattes (2 et 3) avant d'être immobilisée définitivement.

12. Procédé selon la revendication 10, **caractérisé en ce qu'**une partie (8 ou 9) de boîtier de palier et une extrémité (2.1 ou 3.1) de palier d'une patte (2 ou 3) sont prémontées pour former une unité provisoire à l'aide de moyens de fixation disposés sur les parties de boîtier de palier et sur les extrémités de palier et **en ce que** les unités provisoires sont alignées l'une sur l'autre avant d'être immobilisées définitivement.

13. Procédé selon l'une des revendications 10 à 12, **caractérisé en ce que** les extrémités de palier (2.1 et 3.1) des pattes (2 et 3) et les brides partielles (17) des parties (8 et 9) de boîtier de palier sont immobilisées à l'aide de rivets (20) placés dans des alésages (22) mutuellement alignés.
